# EUROPÄISCHE PATENTSCHRIFT

(11) **EP 1 283 666 B1**
(45) Veröffentlichungstag und Bekanntmachung des Hinweises auf die Patenterteilung: **02.11.2005**
(21) Anmeldenummer: 01947145.7
(22) Anmeldetag: 15.05.2001
(51) Int. Cl.: A01F 29/20

(54) **VERFAHREN UND VORRICHTUNG ZUM EINSTELLEN DES SCHNEIDSPALTES AN HÄCKSLERN**
METHOD AND DEVICE FOR ADJUSTING BLADE CLEARANCE ON CHOPPERS
PROCEDE ET DISPOSITIF DE REGLAGE DU JEU DE COUPE SUR DES HACHEUSES

(30) Priorität: 26.05.2000 DE 10026296
(43) Veröffentlichungstag der Anmeldung: 19.02.2003
(73) Patentinhaber: CNH Belgium N.V., 8210 Zedelgem (BE)
(72) Erfinder: ROHDE, Nothart, 79232 March (DE)
(74) Vertreter: Feldkamp, Rainer
(86) Internationale Anmeldenummer: PCT/DE2001/001811
(87) Internationale Veröffentlichungsnummer: WO 2001/089290

(56) Entgegenhaltungen:
- EP-A- 0 291 216
- EP-A- 0 649 591
- DE-A- 4 134 957
- DE-A- 19 633 290
- DE-C- 19 942 400

## Beschreibung

Die Erfindung betrifft ein Verfahren und eine Vorrichtung zum Einstellen des Schneidspaltes an Häckslem zur Verarbeitung landwirtschaftlicher Emtegüter, forstwirtschaftlicher Kulturen sowie für sogenannte nachwachsende Rohstoffe, mit den Merkmalen nach dem Oberbegriff des Patentanspruches 1 und den Verfahrensschritten nach Patentanspruch 9.

Derartige Häcksler befinden sich vorzugsweise als Arbeitsaggregat in gezogenen oder selbstfahrenden Feldhäckslern sowie in stationären Häckselmaschinen. Sie weisen eine rotierende Häckseltrommel mit an deren Umfang schrauben- bzw. keilförmig angeordneten oder aus kurzen Segmenten bestehende Häckselmesser auf. Diese wirken mit einer quer zur Fahrtrichtung zeigenden und horizontal ausgerichteten Gegenschneide zusammen, die beidseitig nahe der Häckseltrommel am Häckseltrommelgehäuse befestigt ist, so daß das Häckselgut über die Gegenschneide den Häckselmessern zugeführt und durch deren Zusammenwirken in kleine Stücke geschnitten wird.

Mit fortlaufendem Einsatz werden jedoch die Häckselmesser stumpf, so daß sie von einer in den Häcksler integrierten Schleifeinrichtung relativ häufig nachgeschliffen werden müssen. Da für das Einhalten der gewünschten Häcksellänge und zur Minimierung der Antriebsleistung für die Häckseltrommel neben scharfen Häckselmessern ein sehr enger Schneidspalt notwendig ist, muß nach jedem Nachschleifen die Einstellung der Gegenschneide zu den Häckselmessern neu vorgenommen werden. So ist es beispielsweise bei selbstfahrenden Feldhäckslern mit einem hohen Durchsatz an Häckselgut üblich, diesen Einstellvorgang durch den Bediener täglich vom Fahrerstand aus vorzunehmen.

Vorrichtungen zum Einstellen des Schneidspaltes an Häckslern sind bereits in einigen Ausführungsvarianten bekannt geworden, die im Anwendungsfall an Feldhäckslern nun näher erläutert werden sollen.

Es ist aus der DE 29 26 538 C2 bekannt, die Gegenschneide mit einem beidseitig an ihr und am Häckseltrommelgehäuse angeordneten Einstellmechanismus auf die mit Häckselmessern besetzte rotierende Häckseltrommel zu und von dieser weg zu bewegen. Das ist völlig unabhängig voneinander auf beiden Seiten möglich. Zur Verstellung selbst dienen mit Schraubspindeln verbundene Elektromotoren, die nach beendetem Schleifen der Häckselmesser zuerst die eine Seite der Gegenschneide auf Knopfdruck des Bedieners an die Häckselmesser bis zu deren Kontakt heranstellen. Der Zustellvorgang wird dann vom Bediener manuell unterbrochen, wenn er aufgrund des Kontaktes ein Ticken hört. Danach wird durch einen Drehrichtungswechsel der Elektromotoren die Gegenschneide zum Erhalt eines Schneidspaltes ein Stück von den Häckselmessern weg bewegt. Die gleichen Bewegungsabläufe werden mit der anderen Seite der Gegenschneide wiederholt. Wenn die Gegenschneide einmal aus einer extremen Schiefstellung zu den Häckselmessern eingestellt wird, muß zum Erreichen eines gleichmäßigen Schneidspaltes über die gesamte Länge der Gegenschneide der Zu- und Rückstellvorgang der Gegenschneide auf beiden Seiten mehrfach wiederholt werden. Nachteilig an dieser Einstellvorrichtung ist einmal deren Ungenauigkeit durch die undefinierte Reaktionszeit des Bedieners. Zum anderen ist dieser Einstellvorgang zeitraubend und er erfordert, daß der Bediener den Fahrerstand verläßt. Schließlich kann ein Bedienungsfehler zur Zerstörung des gesamten Häckslers führen.

Mit der EP 0 291 216 B1 ist eine weitere Vorrichtung zum Einstellen des Schneidspaltes zwischen der Gegenschneide und den Häckselmessern bekannt geworden, bei der der Einstellvorgang weitestgehend automatisiert wurde. Dazu werden den Kontakt zwischen der Gegenschneide und den Häckselmessern signalisierende Meßeinrichtungen eingesetzt, was in diesem Fall auf Schwingungen ansprechende Klopfsensoren sind. Je ein Klopfsensor ist hierfür im Bereich der Gegenschneide auf deren linken und rechten Seite angebracht, deren Signale einem Mikroprozessor und einer Steuervorrichtung zugeleitet werden. Diese Einrichtungen sorgen dafür, daß nach dem wahlweise auf einer Seite begonnenen Zustellvorgang im Falle des Kontakts ab einer bestimmten Größe der dadurch erzeugten Signale der Zustellvorgang der Gegenschneide auf dieser Seite abgebrochen, danach auf der anderen Seite eingeleitet und auch dort bis zum Kontakt fortgeführt wird. Nach jedem Kontakt stellt die Steuervorrichtung durch Umsteuern der Drehrichtung der Elektromotoren die Gegenschneide ein Stück von den Häckselmessern weg, was so lange wiederholt wird, bis die Gegenschneide den gewünschten Schneidspalt zu den Häckselmessern aufweist und sich in einer parallelen Position zu diesen befindet.

Obwohl der Einstellvorgang automatisch abläuft, haften dieser Einstellvorrichtung dennoch einige Nachteile an. Das ist einmal die Funktionsunsicherheit der Klopfsensoren durch mechanische bzw. akustische Störsignale aus dem Umfeld des Häckslers. Um diesen Nachteil in Grenzen zu halten, sind Tiefpaßfilter zur Signalaufbereitung nötig, die jedoch die Herstellungskosten für die Einstellvorrichtung erhöhen. Des weiteren sind Klopfsensoren an sich störanfällig, was sich durch deren ungünstigen Ort der Anbringung im mit Erntegut, Feuchtigkeit und

Schmutz am meisten belasteten Bereich der Häckseltrommel noch negativer auswirkt. Da es zur Erzeugung eines vom Klopfsensor erkennbaren Signals zu einem ziemlich heftigen Kontakt zwischen der Gegenschneide und den Häckselmessern kommen muß, unterliegen diese dadurch einem unnötig hohen Verschleiß. Da aber auch mit dieser Einstellvorrichtung der Einstellvorgang zuerst auf einer Seite und anschließend auf der anderen Seite durchgeführt werden muß, ist trotz des automatischen Ablaufs ein hoher Zeitaufwand zum Einstellen des Schneidspaltes erforderlich.

Der Vollständigkeit halber ist noch auf die Einstellvorrichtung des Schneidspaltes nach der DE 43 35 786 A1 hinzuweisen, die prinzipiell gleich wie die nach der EP 0 291 216 B1 aufgebaut ist. Der Unterschied liegt lediglich in einer verbesserten Signalaufbereitung, wobei die Signale der Klopfsensoren jeweils einer Tiefpaßschaltung und zusätzlich einer nachgeschalteten Schwellwertschaltung zugeführt werden, so daß an deren Ausgängen die Impulssignale entstehen. In einer Ausführung sind die beiden Impulssignale in einem ODER-Gatter verknüpft. Dieses gemeinsame Impulssignal wird dann einem Zähler an dessen Zähleingang und einem retriggerbaren Zeitglied sowie der Steuervorrichtung zugeführt. Alternativ werden die beiden Impulssignale in einem Antivalenzgatter verknüpft und so ebenfalls dem Zähler sowie der Steuervorrichtung zugeführt. Nachteilig an dieser Einstellvorrichtung ist, daß die bei der EP 0 291 216 B1 bereits bemängelte Funktionsunsicherheit lediglich etwas abgeschwächt wird und die übrigen Nachteile, insbesondere der hohe Zeitaufwand für das Einstellen des Schneidspaltes, inhaltlich uneingeschränkt bestehen bleiben.

Deshalb liegt der Erfindung die Aufgabe zugrunde, ein Verfahren und eine Vorrichtung zum Einstellen des Schneidspaltes an Häckslem zu schaffen, mit dem die Einstellung des Schneidspaltes in sehr kurzer Zeit möglich ist.

Diese Aufgabe wird durch den Gegenstand des Patentanspruches 1 und die Verfahrensschritte nach dem Patentanspruch 9 gelöst, wobei in den darauf rückbezogenen Unteransprüchen Merkmale aufgeführt sind, die die Erfindung in vorteilhafter Weise weiterentwickeln.

Durch die verdrehsichere Verbindung der Häckseltrommel in einer definierten Position zur Gegenschneide mit der Ausgangswelle eines Drehgebers mißt dieser permanent den aktuellen Drehwinkel der Häckseltrommel, den er an die mit ihm elektrisch verbundene Auswerteeinheit weiterleitet. In der Auswerteeinheit wird entsprechend der konstruktiven Gestalt der Häckseltrommel jedem Drehwinkel die Stelle der Schneidkante der Häckselmesser zugeordnet, die bei diesem Drehwinkel der Schneidkante der Gegenschneide augenblicklich gegenüber steht. Damit erkennt die Auswerteeinheit nach einer einmaligen Vorbereitung auf die konstruktive Gestalt der Häckseltrommel, welches Häckselmesser das betrifft für den Fall, daß die Häckselmesser in keinem Zügigkeitswinkel gegenüber der Gegenschneide angestellt sind. Darüber hinaus ermittelt die Auswerteeinheit auch noch die Stelle der Anbringung dieses Häckselmessers über die Breite der Häckseltrommel gesehen, was insbesondere bei Häckseltrommeln mit einer Vielzahl kurzer Häckselmesser Anwendung findet.

Zum anderen ist es aber auch bei Vorhandensein eines Zügigkeitswinkels der Häckselmesser gegenüber der Gegenschneide möglich, exakt die Stelle der der Schneidkante der Gegenschneide gegenüber stehende Schneidkante eines einzelnen Häckselmessers zu lokalisieren, so daß damit diese Stelle der Breite der Häckseltrommel zugeordnet werden kann, was in erster Linie für Häckseltrommeln mit v-förmig angeordneten Häckselmessern in Frage kommt.

Die Auswerteeinheit steht auch noch mit einer den Schneidspalt überwachenden Einrichtung in elektrischer Verbindung, die ihr ein Signal vermittelt, wenn der optimale Schneidspalt erreicht ist bzw. die Schneidkante eines Häckselmessers die Schneidkante der Gegenschneide während des Einstellvorganges zum ersten Mal berührt. Genau für diesen Augenblick lokalisiert die Auswerteeinheit den Ort vorstehend beschriebener Stelle innerhalb der Breite der Häckseltrommel und betätigt über ihre elektrische Verbindung zu den Stellmotoren des Einstellmechanismus diese in später zu beschreibenden erfindungsgemäßen Verfahrensschritten. Vorsorglich wird an dieser Stelle darauf hingewiesen, daß anstelle der elektrischen Stellmotoren auch andere Antriebsmäglichkeiten zur Erzeugung einer geradlinigen Bewegung mit dem gleichen Erfolg eingesetzt werden können und deshalb auch zum Schutzumfang dieser Erfindung gehören. Beispiele dafür könnten pneumatische oder hydraulische Antriebe sein.

In einer bevorzugten Ausbildung der Erfindung sollte ein Inkrementalgeber als Drehgeber zum Einsatz kommen, der über ein erstes Kabel mit einem elektronischen Zähler in der Auswerteeinheit verbunden ist. Dieser gibt pro Bruchteil eines Drehwinkels der Häckseltrommel nur einen kurzen Impuls ab, so daß für die Erzeugung eines Zahlenwertes für alle Drehwinkel durch den elektronischen Zähler mitgezählt werden muß. Vom Inkrementalgeber führt noch ein zweites Kabel zum elektronischen Zähler, das zur Übermittlung eines zusätzlichen Impulses für einen definierten Startpunkt notwendig ist, um den elektronischen Zähler bei einem gewissen Wert des Drehwinkels auf Null zu setzten. Der elektronische Zähler steht mit einer in der Anzeigeeinheit installierten elektronischen Tabelle in Verbindung, die als mathematische Funktion verstanden werden kann, da in ihr entsprechend der konstruktiven Gestalt der Häckseltrommel für jeden Drehwinkel alle Stellen auf den Schneidkanten der Häckselmesser gespeichert sind, die der Schneidkante der Gegenschneide gerade gegenüber stehen.

Eine zweckmäßige Ausgestaltung der Erfindung besteht auch darin, den elektronischen Zähler und die elektronische Tabelle durch einen Mikroprozessor zu ersetzen, der vorstehende Werte aus der elektronischen Tabelle ständig errechnet.

In einer anderen Ausführung der Erfindung hat es sich bewährt, als Drehgeber einen Absolut-Geber zu verwenden, der direkt eine binäre Zahl erzeugt, die dem absoluten Wert des Drehwinkels entspricht.

Die Überwachung des Schneidspaltes kann in vorteilhafter Weise einmal von einer Abstandsmeßeinrichtung vorgenommen werden, die entweder den Schneidspalt direkt oder indirekt mißt. Letztgenannte Möglichkeit könnte beispielsweise die Länge einer vorbestimmten Funkenüberschlagsstrecke zwischen den Häckselmessern und der Gegenschneide sein, wenn diese Bauteile elektrisch voneinander isoliert sind und sich unter Einschaltung einer Hochspannungsquelle als Pole im Abstand des Schneidspaltes gegenüber stehen. Zum anderen ist es in einer anderen bevorzugten Ausbildung der Einrichtung zur Überwachung des Schneidspaltes ebenso möglich, einen Klopfsensor zum Anzeigen des Kontaktes zwischen den Schneidkanten der Häckselmesser und der Gegenschneide einzusetzen, bei dessen Ansprechen jedoch die Größe des Schneidspaltes kleiner als Null ist.

Schließlich ist es für die Verwirklichung der Erfindung besonders zweckmäßig, die Häckselmesser auf der Häckseltrommel in einem Zügigkeitswinkel gegenüber der Gegenschneide anzubringen und immer nur eine Schneidkante des Häckselmessers nach der anderen zum Einsatz zu bringen, weil das die einfachste Möglichkeit der Zuordnung der sich gegenüber stehenden Stellen der Schneidkanten zu den jeweiligen Drehwinkeln in der elektronischen Tabelle ist. Es wird aber ausdrücklich an dieser Stelle darauf hingewiesen, daß die Erfindung auch dann als benutzt anzusehen ist, wenn sie an den heute in der Praxis sehr häufig anzutreffenden Häckseltrommeln mit sogenannten Überschnittbereichen eingesetzt wird. Dazu bedarf es abweichend von der hier beschriebenen Prinziplösung lediglich einfacher und dem Fachmann geläufiger Ergänzungen oder Veränderungen. Das könnte beispielsweise sein, daß der schon zum Schnitt ansetzenden Schneidkante des nachfolgenden Häckselmessers rechnerisch in der elektronischen Tabelle kein Wert zugeordnet ist, so lange das erste Häckselmesser noch schneidet.

Mit dieser Vorrichtung zum Einstellen des Schneidspaltes an Häckslern läßt sich das erfindungsgemäße Verfahren mit folgenden Verfahrensschritten verwirklichen.

Nach dem Schleifen der Häckseltrommel oder deren Bestückung mit neuen Häckselmessern befindet sich die Gegenschneide generell in einem Abstand vor dem Rotationskreis der Häckselmesser, der größer als der optimale Schneidspalt ist. Danach wird die Häckseltrommel in Rotation versetzt, wobei sie sich vorwärts oder rückwärts bzw. mit der Betriebsdrehzahl oder auch mit verminderter Drehzahl drehen kann. Der mit ihr verdrehsicher verbundene Drehgeber mißt dabei ständig deren Drehwinkel gegenüber einem Startpunkt, der einmal definiert wurde und der bei jeder weiteren Umdrehung kontrolliert und eventuell korrigiert wird. Nun werden beide Stellmotoren des Einstellmechanismus eingeschaltet und die Gegenschneide bewegt sich auf die Häckselmesser zu. Entweder mit Erreichen des optimalen Schneidspaltes oder beim ersten erkennbaren Kontakt der Schneidkanten der Häckselmesser mit der der Gegenschneide liefert die den Schneidspalt überwachende Einrichtung der Auswerteeinheit ein Signal und diese ordnet das Signal einmal einem Drehwinkel und damit einem ganz bestimmten Häckselmesser zu und zum anderen einem Bereich innerhalb der Breite der Häckseltrommel.

Handelte es sich dabei um einen Bereich aus der linken oder der rechten Hälfte der Häckseltrommel stoppt die Auswerteeinheit entweder den linken bzw. den rechten Stellmotor und betreibt den anderen so lange weiter, bis die den Schneidspalt überwachende Einrichtung erneut ein Signal über das Erreichen des optimalen Schneidspaltes bzw. den Kontakt aus dem Bereich der anderen Hälfte der Häckseltrommel erzeugt. Wenn die Auswerteeinheit das Signal einem Bereich aus der Mitte der Häckseltrommel zugeordnet hat, stoppt sie beide Stellmotoren gleichzeitig.

Es hat sich bei diesem Verfahren zum Einstellen des Schneidspaltes als zweckmäßig und darüber hinaus als ausreichend erwiesen, die Häckseltrommel nur in einen linken, einen rechten und einen mittleren Bereich zu unterteilen.

In einer bevorzugten Ausgestaltung des Verfahrens sollte der optimale Schneidspalt direkt oder indirekt gemessen werden, weil dabei die Gegenschneide gleich beim optimalen Schneidspalt vor dem Rotationskreis der Häckselmesser stehen bleibt, wodurch eine Rückstellbewegung entfällt.

Zusammenfassend ist für die erfindungsgemäße Vorrichtung und das Verfahren zum Einstellen des Schneidspaltes an Häckslem von Vorteil, daß damit der Einstellvorgang in kürzester Zeit möglich geworden ist.

Die Erfindung soll nun anhand eines Ausführungsbeispieles näher erläutert werden, wobei die einzelnen Figuren zeigen:
- Fig. 1:: eine schematische Schnittdarstellung durch das Häckselaggregat eines Feldhäckslers
- Fig. 2:: eine Seitenansicht auf den Einstellmechanismus zum Einstellen des Schneidspaltes zwischen der Gegenschneide und den Häckselmessem
- Fig. 3:: eine Ansicht A nach Fig. 2 mit einer Häckseltrommel mit zwei v-förmig nebeneinander angeordneten Reihen von Häckselmessern und dem Blockschaltbild zum Einstellen des Schneidspaltes
- Fig. 4:: eine Ansicht A nach Fig. 2 mit einer Häckseltrommel mit vier nebeneinander angeordneten Reihen von Häckselmessern mit dem gleichen Blockschaltbild wie in Fig. 3.

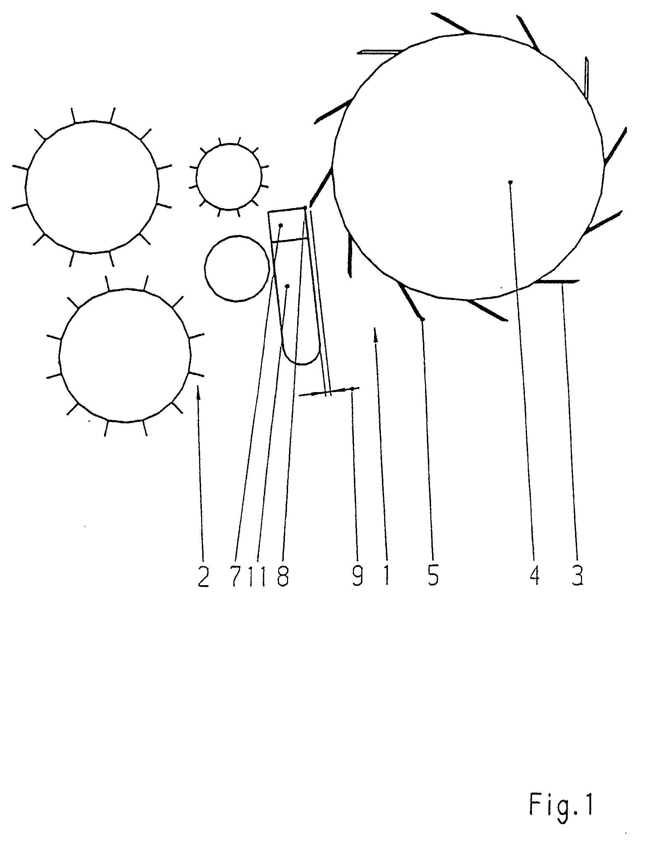

In Figur 1 sind die wichtigsten Bauteile des Häckselaggregates 1 eines Feldhäckslers zu sehen, das aus in Fahrtrichtung gesehen vom liegenden und gegensinnig rotierenden Einzugswalzen 2 besteht, denen die mit Häckselmessern 3 bestückte Häckseltrommel 4 nachgeordnet ist. Bei der Rotation der Häckseltrommel 4 beschreiben die Schneidkanten 5 der Häckselmesser 3 den Rotationskreis 6 der Häckseltrommel 4. Zwischen den Einzugswalzen 2 und der Häckseltrommel 4 befindet sich die Gegenschneide 7 in einer horizontalen Ausrichtung zum Rotationskreis 6 der Häckseltrommel 4, wobei zwischen ihrer Schneidkante 8 und denen der Häckselmesser 3 ein gleichmäßiger Schneidspalt 9 über die gesamte Breite der Häckseltrommel 4 eingestellt ist.

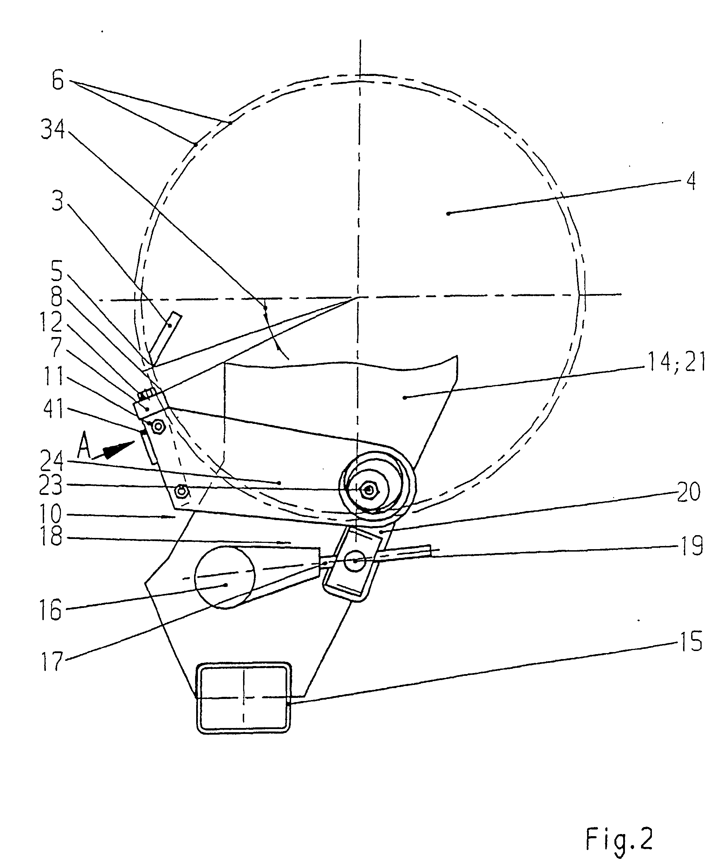

Zum Einstellen eines minimalen Schneidspaltes 9 für unterschiedlich große Rotationskreise 6, beispielsweise infolge des Nachschleifens der Häckselmesser 3 bzw. der Austattung der Häckseltrommel 4 mit neuen Häckselmessern 3, ist die Gegenschneide 7 mit Hilfe eines später zu erläuternden und in den Figuren 2 bis 4 gezeigten Einstellmechanismus 10 in der örtlichen Lage innerhalb des Häckselaggregates 1 veränderbar.

Im Sinne einer vibrationsfreien Befestigung der Gegenschneide 7 innerhalb des Häckselaggregates 1 liegt sie mit ihrer ganzen Länge auf einem stabil ausgebildeten Gegenschneidenträger 11 auf Eine form- und kraftschlüssige Verbindung zwischen ihren äußeren Enden ist mittels Paßschrauben 12 verwirklicht. Der Gegenschneidenträger 11 ist an seiner Unterseite mit dem oberen Ende eines annähernd die lichte Weite des Häckselaggregates 1 aufweisenden Bleches 13 in Form einer Einspannung verbunden, das sich in Richtung der auf die Schneidkante 8 der Gegenschneide 7 einwirkenden Schnittkraft erstreckt. Das untere Ende des Bleches 13 stützt sich ebenfalls in Form einer Einspannung auf einem im Häckseltrommelgehäuse 14 eingeschweißten Querträger 15 ab.

Der zur Einstellung des Schneidspaltes 7 dienende Einstellmechanismus 10 besteht aus links und rechts neben den äußeren Enden des Gegenschneidenträgers 11 angebrachten Bauteilen gleichen Aufbaues, die lediglich spiegelbildlich angeordnet sind. Dazu gehören gestellfest und schwenkbeweglich aufgehangene elektrische Stellmotoren 16;16', die mit dem einen Ende je einer Schraubspindel 17 in antriebsmäßiger Verbindung stehen. Das andere Ende der Schraubspindeln 17 steckt in einem am Häckseltrommelgehäuse 14 gelagerten Hebelmechanismus 18 in einem daran gelenkig angebrachten Gewindebolzen 19. Das dem Gewindebolzen 19 gegenüberliegende Ende des Hebelmechanismus 18 ist an den Gegenschneidenträger 11 angeschraubt. Der Hebelmechanismus 18 besteht im Detail aus einem Schwenkhebel 20, der einenends vorstehend erwähnten Gewindebolzen 19 trägt und anderenends um einen an der linken Seitenwand 21 bzw. der rechten Seitenwand 22 befestigten Lagerbolzen 23 drehbar gelagert ist. Am Schwenkhebel 20 ist in einer Anordnung exzentrisch um den Lagerbolzen 23 ein Seitenarm 24 drehbar aufgehangen, dessen anderes Ende die Verbindung zum Gegenschneidenträger 11 herstellt. Die exzentrische Nabe 25 des Schwenkhebels 20 ist mittels einer Kronenmutter 26 und einer starken Scheibe 27 gegen einen Bund 28 des Lagerbolzens 23 in axialer Richtung anpreßbar.

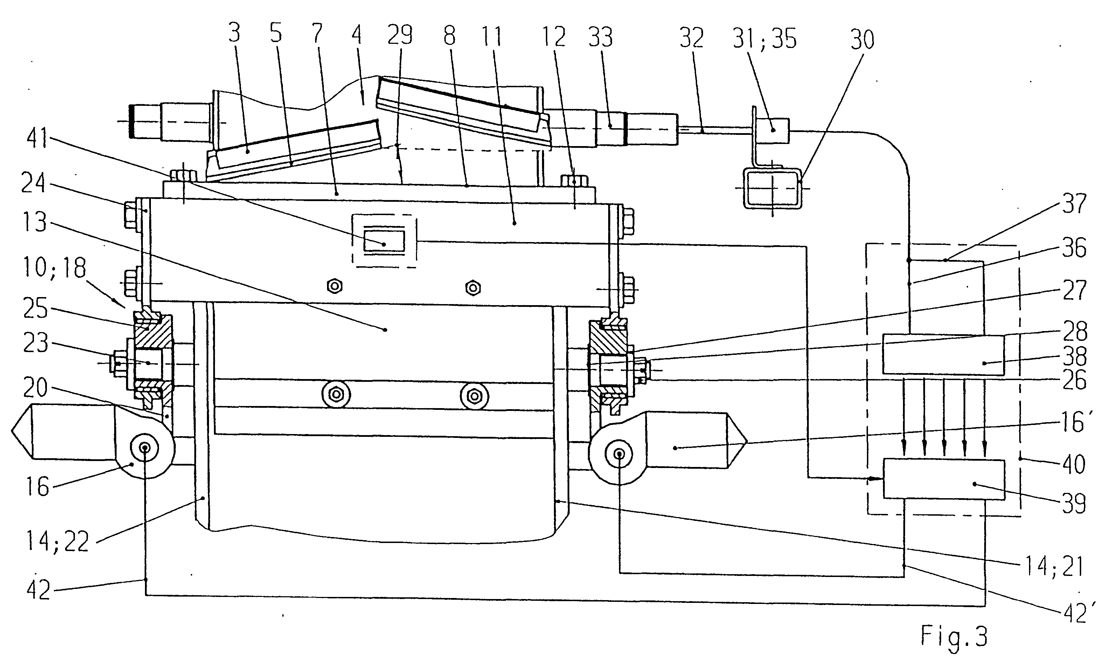

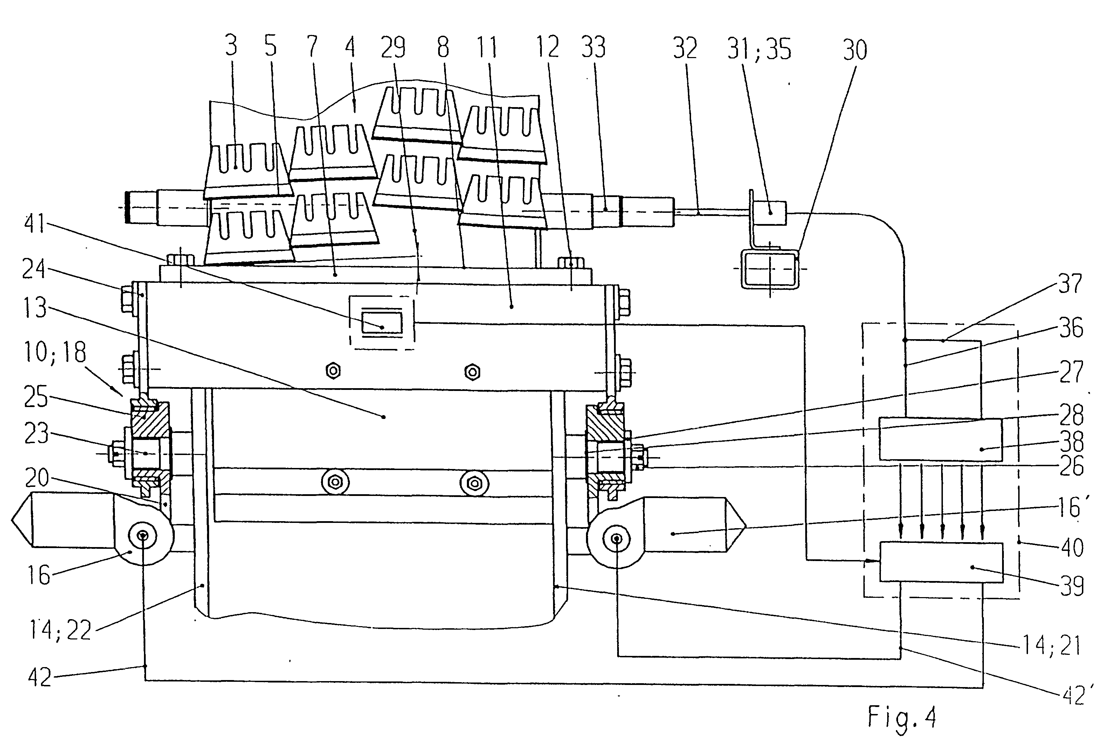

In den Figuren 3 und 4 ist für beide ausgewählte Bauarten von Häckseltrommeln 4 zu sehen, daß die Schneidkanten 5 aller Häckselmesser 3 gegenüber der Schneidkante 8 der Gegenschneide 7 einen Zügigkeitswinkel 29 aufweisen. An gleicher Stelle sind die übrigen Bauteile der Vorrichtung zur Einstellung des Schneidspaltes 9 gezeigt, zu denen einmal der am Rahmen 30 des Feldhäckslers befestigte Drehgeber 31 gehört, dessen Ausgangswelle 32 mit der Welle 33 der Häckseltrommel 4 zum permanenten Messen ihres Drehwinkels 34 verdrehsicher gekoppelt ist. In diesem Ausführungsbeispiel findet ein sogenannter Inkrementalgeber 35 Anwendung, auf den das in den Figuren 3 und 4 enthaltene Blockschaltbild zugeschnitten ist. Darin führt vom Inkrementalgeber 35 ein erstes Kabel 36 zur Übermittlung des Drehwinkels 34 und ein zweites Kabel 37 zur Übermittlung eines zusätzlichen Impulses an einen elektronischen Zähler 38, dem eine elektronische Tabelle 39 nachgeschaltet ist. Beide zusammen bilden die Auswerteeinheit 40, in die das Signal eines am Gegenschneidenträger 11 befestigten Klopfsensors 41 eingeht. Schließlich steht noch die Auswerteeinheit 40 mit den Stellmotoren 16;16' am Einstellmechanismus 10 in elektrischer Verbindung 42;42'.

## Patentansprüche

1. Vorrichtung zum Einstellen des Schneidspaltes an Häckslern, insbesondere Feldhäckslern, mit einem Häckselaggregat (1):
◆ dessen Häckseltrommel (4) mit mehreren Häckselmessern (3) besetzt ist,
◆ dessen Gegenschneide (7) einen Schneidspalt (9) zum Rotationskreis (6) der Häckselmesser (3) aufweist,
◆ an dem sich ein Einstellmechanismus (10) zur Einstellung des Schneidspaltes (9) befindet, der mit den äußeren Enden der Gegenschneide (7) verbunden ist und zu deren Bewegung je einen Stellmotor (16;16') aufweist,
◆ das mit einer den Schneidspalt (9) überwachenden Einrichtung ausgestattet ist,
**dadurch gekennzeichnet, daß**
a) die Häckseltrommel (4) in einer definierten Position zur Gegenschneide (7) mit der Ausgangswelle (32) eines Drehgebers (31) verdrehsicher verbunden ist,
b) der Drehgeber (31) mit einer Auswerteeinheit (40) elektrisch verbunden ist, in der entsprechend der konstruktiven Gestalt der Häckseltrommel (4) jedem vom Drehgeber (31) gemessenen Drehwinkel (34) der Häckseltrommel (4) die Stellen der Schneidkanten (5) der Häckselmesser (3) zugeordnet sind, die bei diesem Drehwinkel (34) der Schneidkante (8) der Gegenschneide (7) gegenüber stehen,
c) die Auswerteeinheit (40) mit den Stellmotoren (16;16') in elektrischer Verbindung (41;41') steht.
d) die den Schneidspalt (9) überwachende Einrichtung mit der Auswerteeinheit (40) elektrisch verbunden ist.

2. Vorrichtung nach Anspruch 1, **dadurch gekennzeichnet, daß** der Drehgeber (31) als Inkrementalgeber (35) ausgebildet ist, der über ein erstes Kabel (36) mit einem in der Auswerteeinheit (40) installierten elektronischen Zähler (38) elektrisch verbunden ist, der wiederum mit einer elektronischen Tabelle (39) in Verbindung steht.

3. Vorrichtung nach den Ansprüchen 1 und 2, **dadurch gekennzeichnet, daß** der Inkrementalgeber (35) über ein zweites Kabel (37) mit dem elektronischen Zähler (38) in der Anzeigeeinheit (40) zur Übermittlung eines zusätzlichen Impulses verbunden ist.

4. Vorrichtung nach Anspruch 1, **dadurch gekennzeichnet, daß** der Drehgeber (31) als Absolut-Geber ausgebildet ist.

5. Vorrichtung nach den Ansprüchen 1 bis 4, **dadurch gekennzeichnet, daß** die Auswerteeinheit (40) ein Mikroprozessor ist.

6. Vorrichtung nach einem oder mehreren der vorstehenden Ansprüche, **dadurch gekennzeichnet, daß** die den Schneidspalt (9) überwachende Einrichtung ein Klopfsensor (41) ist.

7. Vorrichtung nach einem oder mehreren der vorstehenden Ansprüche, **dadurch gekennzeichnet, daß** die den Schneidspalt (9) überwachende Einrichtung eine Abstandsmeßeinrichtung ist.

8. Vorrichtung nach einem oder mehreren der vorstehenden Ansprüche, **dadurch gekennzeichnet, daß** die Schneidkanten (5) der Häckselmesser (3) der Häckseltrommel (4) gegenüber der Gegenschneide (7) in einem Zügigkeitswinkel (29) angestellt sind und daß sie so auf deren Umfang verteilt angeordnet sind, daß während der Rotation der Häckseltrommel (4) immer nur eine Schneidkante (5) der Häckselmesser (3) der Schneidkante (8) der Gegenschneide (7) gegenüber steht.

9. Verfahren zum Einstellen des Schneidspaltes an Häckslern, insbesondere Feldhäckslern, mit einem Häckselaggregat (1),
◆ dessen Häckseltrommel (4) mit mehreren Häckselmessern (3) besetzt ist,
◆ dessen Gegenschneide (7) einen Schneidspalt (9) zum Rotationskreis (6) der Häckselmesser (3) aufweist,
◆ an dem sich ein Einstellmechanismus (10) zur Einstellung des Schneidspaltes (9) befindet, der mit den äußeren Enden der Gegenschneide (7) verbunden ist und zu deren Bewegung je einen Stellmotor (16;16') aufweist,
◆ das mit einer den Schneidspalt (9) überwachenden Einrichtung ausgestattet ist,
**dadurch gekennzeichnet, daß es folgende Verfahrensschritte umfaßt:**
a) die Gegenschneide (7) befindet sich oder wird in einen Abstand zum Rotationskreis (6) der Häckselmesser (3) eingestellt, der größer als der optimale Schneidspalt (9) ist,
b) ein Drehgeber (31) mißt permanent den aktuellen Drehwinkel (34) der rotierenden Häckseltrommel (4),
c) der aktuelle Drehwinkel (34) wird einer Auswerteeinheit (40) zugeleitet, in der entsprechend der konstruktiven Gestalt der Häckseltrommel (4) die Stelle der Schneidkante (5) des Häckselmessers (3) erkannt oder errechnet wird, die bei diesem Drehwinkel (34) der Schneidkante (8) der Gegenschneide (7) augenblicklich gegenüber steht,
d) in der Auswerteeinheit (40) wird eine Einteilung der Häckseltrommel (4) über deren Breite gesehen in mehrere Bereiche vorgenommen, in denen die Schneidkanten (5) der Häckselmesser (3) der Schneidkante (8) der Gegenschneide (7) gegenüber stehen,
e) beide Stellmotoren (16;16') bewegen die Gegenschneide (7) gleichzeitig in Richtung der Häckseltrommel (4),
f) mit Erreichen des optimalen Schneidspaltes (9) oder bei Kontakt der Schneidkanten (5;8) der Häckselmesser (3) und der Gegenschneide (7) an irgend einer Stelle signalisiert das die den Schneidspalt (9) überwachende Einrichtung der Auswerteeinheit (40), die darauf hin entweder den linken bzw. den rechten Stellmotor (16;16') stoppt, wenn in dem Augenblick die Schneidkante (5) eines Häckselmessers (3) in einem Bereich aus der linken bzw. der rechten Hälfte der Häckseltrommel (4) der Schneidkante (8) der Gegenschneide (7) gegenüber steht und sie betreibt den anderen Stellmotor (16;16') so lange weiter, bis die den Schneidspalt (9) überwachende Einrichtung erneut ein derartiges Signal liefert,
g) mit Erreichen des optimalen Schneidspaltes (9) oder bei Kontakt der Schneidkanten (5;8) der Häckselmesser (3) und der Gegenschneide (7) stoppt die Auswerteeinheit (40) den linken und den rechten Stellmotor (16;16') gleichzeitig, wenn in dem Augenblick die Schneidkante (5) eines Häckselmessers (3) in einem mittleren Bereich der Häckseltrommel (4) der Schneidkante (8) der Gegenschneide (7) gegenüber steht.

10. Verfahren nach Anspruch 9, **dadurch gekennzeichnet, daß** in der Auswerteeinheit (40) eine Einteilung der Häckseltrommel (4) über deren Breite gesehen in einen linken, einen rechten und einen mittleren Bereich vorgenommen wird, in denen die Schneidkanten (5) der Häckselmesser (3) der Schneidkante (8) der Gegenschneide (7) gegenüber stehen.

11. Verfahren nach den Ansprüchen 9 und 10, **dadurch gekennzeichnet, daß** sich beim Einstellen des Schneidspaltes (9) über den Kontakt der Schneidkanten (5;8) der Häckselmesser (3) und der Gegenschneide (7) an die Zustellbewegung der Gegenschneide (7) eine kurze Rückstellbewegung anschließt.

## Claims

1. A device for adjusting the cutter gap on crop choppers, especially forage harvesters, with a chopper unit (1):
- the chopper cylinder (4) of which is equipped with chopping knives (3),
- the counter-cutter blade (7) of which exhibits a cutter gap (9) towards the rotational circle (6) of the chopping knives (3),
◆ on which an adjusting mechanism (10) for setting the cutter gap (9) is located, which is joined to the outer ends of the counter-cutter blade (7) and each end of which possesses a servomotor (16,16') for its motion,
◆ which is equipped with a device for monitoring the cutter gap (9),
**characterised in that,**
a) the chopper cylinder (4) is rigidly connected in a defined position relative to the counter-cutter blade (7) with the output shaft (32) of a rotary pickup (31),
b) the rotary pickup (31) is electrically connected with an evaluation unit (40), in which according to the structural design of the chopper cylinder (4) each of the rotational angles (34) of the chopper cylinder (4) measured by the rotary pickup (31) the positions of the cutting edges (5) of the chopping knife (3) are assigned, which is opposite the cutting edge (8) of the counter-cutter blade (7),for this angle of rotation (34).
c) the evaluation unit (40) is electrically connected (41;41') to the servomotors (16;16'),
d) the device for monitoring the cutter gap (9) is electrically connected to the evaluation unit (40).

2. A device in accordance with claim 1, **characterised in that**, the rotary pickup (31) is designed as an incremental pickup (35), which is connected via a first cable (36) with an electronic counter (38) installed in the evaluation unit (40), which in turn is connected with an electronic table (39).

3. A device in accordance with claims 1 to 2, **characterised in that**, the incremental pickup (35) is connected with the electronic counter (38) in the display unit (40) via a second cable (37) for passing on an additional pulse.

4. A device in accordance with claim 1, **characterised in that**, the rotary pickup (31) is designed as an absolute encoder.

5. A device in accordance with claims 1 to 4, **characterised in that**, the evaluation unit (40) is a microprocessor.

6. A device in accordance with one or more of the foregoing claims, **characterised in that** the device for monitoring the cutter gap (9) is a knock sensor (41).

7. A device in accordance with one or more of the foregoing claims, **characterised in that**, the device for monitoring the cutter gap (9) is a distance-measuring device.

8. A device in accordance with one or more of the foregoing claims, **characterised in that**, the cutting edges (5) of the chopping knives (3) of the chopper cylinder (4) are set at a draftiness angle (29) relative to the counter cutter blade (7) and that they are arranged distributed around its circumference in such a way that during the rotation of the chopper cylinder (4) always only one cutting edge (5) of the chopping knife (3) is opposite the cutting edge (8) of the counter-cutter blade (7).

9. A method for adjusting the cutter gap on crop choppers, especially forage harvesters, with a chopper unit (1):
◆ the chopper cylinder (4) of which is equipped with chopping knives (3),
◆ the counter-cutter blade (7) of which exhibits a cutter gap (9) towards the rotational circle (6) of the chopping knives (3),
◆ on which an adjusting mechanism (10) for setting the cutter gap (9) is located, which is joined to the outer ends of the counter-cutter blade (7) and each end of which possesses a servomotor (16,16') for its motion,
◆ which is equipped with a device for monitoring the cutter gap (9),
**characterised in that it includes the following procedural steps:**
a) the counter-cutter blade (7) is situated at or is set to a distance from the rotational circle (6) of the chopping knife (3), which is greater than the optimum cutter gap (9),
b) a rotary pickup (31) measures permanently the current rotational angle (34) of the rotating chopper cylinder (4,
c) the current rotational angle (34) is passed on to an evaluation unit (40), in which according to the constructional design of the chopper cylinder (4) the position of the cutting edge (5) of the chopping knife (3) is recognised or calculated, which for this rotational angle (34) the cutting edge (8) of the counter-cutter blade (7) is momentarily at,
d) in the evaluation unit (40) a division of the chopper cylinder (4) into several regions viewed over its breadth is undertaken, in which the cutting edges (5) of the chopping knives (3) are from the cutting edge (8) of the counter-cutter blade,
e) both servomotors (16;16') move the counter-cutter blade (7) simultaneously in the direction of the chopper cylinder (4),
f) on attaining the optimum cutter gap (9) or when contact of the cutting edges (5;8) of the chopping knife (3) and the counter-cutter blade (7) at any place is signalled to the device on the evaluation unit for monitoring the cutter gap (9) it thereupon stops either the left or the right servomotor (16;16), if at that moment the cutting edge (5) of a chopping knife (3) in an area of the left or the right half of the chopper cylinder (4) lies opposite the cutting edge (8) of the counter-cutter blade (7) and it continues to drive the other servomotor (16;16) so long until the device for monitoring the cutter gap (9) again delivers such a signal,
g) on attaining the optimum cutter gap (9) or on contact of the cutting edges (5;8) of the chopping knife (3) and the counter-cutter blade (7) the evaluation unit (40) stops the left and right servomotors (16;16') simultaneously, if at that moment the cutting edge (5) of one chopping knife (3) in a central area of the chopper cylinder (4) is opposite the cutting edge (8) of the counter-cutter blade (7).

10. A procedure in accordance with claim 9, **characterised in that** in the evaluation unit (40) a division of the chopper cylinder (4) viewed over its width into a left, a right and a central region is undertaken, in which the cutting edges (5) of the chopping knife (3) are opposite cutting edge (8) of the counter-cutter blade (7).

11. A procedure in accordance with claims 9 and 10, **characterised in that** for the adjustment of the cutter gap (9) through the contact of the cutting edges (5;8) of the chopping knife (3) and the counter-cutter blade (7) the feed motion of the counter-cutter blade (7) is followed by a brief return movement.

## Revendications

1. Dispositif pour le réglage de l'intervalle de coupe sur des hacheurs, en particulier des récolteuses-hacheuses-chargeuses, avec un groupe hacheur (1) :
- dont le tambour hacheur (4) est doté de lames tranchantes (3),
- dont le contre-couteau (7) présente un intervalle de coupe (9) par rapport au cercle de rotation (6) des lames tranchantes (3),
- sur lequel se trouve un mécanisme de réglage (10) pour le réglage de l'intervalle de coupe (9), qui est relié par ses extrémités extérieures avec le contre-couteau (7) et qui présente des moteurs de positionnement respectifs (16) ; 16') pour son mouvement,
- qui est équipé d'un dispositif de surveillance de l'intervalle de coupe (9),
**caractérisé en ce que**
a) le tambour hacheur (4) est relié, dans une position définie par rapport au contre-couteau (7), à sécurité de rotation avec l'arbre de sortie (32) d'un encodeur (31),
b) l'encodeur (31) est relié électriquement avec une unité d'exploitation (40), dans laquelle, selon la forme constructive du tambour hacheur (4), les positions des taillants (5) des lampes tranchantes (3) correspondent à chaque angle de rotation (34) du tambour hacheur (4) mesuré par l'encodeur (31), qui sont opposées, pour cet angle de rotation (34) au taillant (8) du contre-couteau (7),
c) l'unité d'exploitation (40) est en relation électrique (41; 41') avec les moteurs de positionnement (16; 16'),
d) le dispositif de surveillance de l'intervalle de coupe (9) est relié électriquement avec l'unité d'exploitation (40).

2. Dispositif selon la revendication 1, **caractérisé en ce que** l'encodeur (31) a la forme d'un capteur incrémentiel (35) qui est relié électriquement via un premier câble (36) avec un compteur électronique (38) installé dans l'unité d'exploitation (40), compteur, qui à son tour, est en relation avec un tableau électronique (39).

3. Dispositif selon les revendications 1 et 2, **caractérisé en ce que** le capteur incrémentiel (35) est relié via un deuxième câble (37) avec le compteur électronique (38) de l'unité d'affichage (40) pour la transmission d'une impulsion supplémentaire.

4. Dispositif selon la revendication 1, **caractérisé en ce que** l'encodeur (31) a la forme d'un capteur absolu.

5. Dispositif selon les revendications 1 à 4, **caractérisé en ce que** l'unité d'exploitation (40) est un microprocesseur.

6. Dispositif selon l'une ou plusieurs des revendications qui précèdent, **caractérisé en ce que** le dispositif de surveillance de l'intervalle de coupe (9) est un capteur de battement (41).

7. Dispositif selon une ou plusieurs des revendications qui précèdent, **caractérisé en ce que** le dispositif de surveillance de l'intervalle de coupe (9) est un dispositif de mesure à distance.

8. Dispositif selon une ou plusieurs des revendications qui précèdent, **caractérisé en ce que** les taillants (5) des lames tranchantes (3) du tambour hacheur (4) sont disposées vis-à-vis du contre-couteau (7) selon un angle de stabilité (29) et sont ainsi distribuées sur leur périphérie de manière à ce que, pendant la rotation du tambour hacheur (4), seul un taillant (5) des lames tranchantes (3) se trouve en face du taillant (8) du contre-couteau (7).

9. Procédé pour le réglage de l'intervalle de coupe sur des hacheurs, en particulier des récolteuses-hacheuses-chargeuses, avec un groupe hacheur (1) :
- dont le tambour hacheur (4) est doté de lames tranchantes (3),
- dont le contre-couteau (7) présente un intervalle de coupe (9) par rapport au cercle de rotation (6) des lames tranchantes (3),
- sur lequel se trouve un mécanisme de réglage (10) pour le réglage de l'intervalle de coupe (9), qui est relié par ses extrémités extérieures avec le contre-couteau (7) et qui présente des moteurs de positionnement respectifs (16) ; 16') pour son mouvement,
- qui est équipé d'un dispositif de surveillance de l'intervalle de coupe (9),
**caractérisé en ce qu'**il comprend les étapes de procédé suivantes :
a) le contre-couteau (7) se trouve ou est réglé à une distance du cercle de rotation (6) des lames tranchantes (3) qui est supérieure à l'intervalle de coupe optimal (9),
b) un encodeur (31) mesure en permanence l'angle de rotation actuel (34) du tambour hacheur (4) en rotation,
c) l'encodeur actuel (34) est conduit à une unité d'exploitation (40) dans laquelle, selon la forme constructive du tambour hacheur (4), la position du taillant (5) de la lame tranchante (3) est détectée ou calculée qui, pour cet angle de rotation (34), est opposée instantanément au taillant (8) du contre-couteau (7),
d) dans l'unité d'exploitation (40), une subdivision du tambour hacheur (4) est effectuée, considérée dans le sens de leur largeur, en plusieurs sections dans lesquelles les taillants (5) des lames tranchantes (3) sont opposées au taillant (8) du contre-couteau (7),
e) les deux moteurs de positionnement (16;16') déplacent le contre-couteau (7) simultanément en direction du tambour hacheur (4),
f) avec l'atteinte de l'intervalle de coupe optimal (9) ou en cas de contact des taillants (5,8) des lames tranchantes (3) et du contre-couteau (7) dans une position quelconque, ceci est signalé par le dispositif de surveillance de l'intervalle de coupe (9) de l'unité d'exploitation (40), qui arrête ensuite le moteur de positionnement gauche ou droit (16;16') si à ce moment-là le taillant (5) d'une lame tranchante (3) est opposé au taillant (8) du contre-couteau (7) dans une section composée de la moitié gauche ou de la moitié droite du tambour hacheur (4) et entraîne l'autre moteur de positionnement (16;16') jusqu'à ce que le dispositif de surveillance de l'intervalle de coupe (9) émette à nouveau un signal de ce type,
g) avec l'atteinte de l'intervalle de coupe optimal (9) ou en cas de contact des taillants (5;8) des lames tranchantes (3) et du contre-couteau (7), l'unité d'exploitation (40) arrête les moteurs de positionnement gauche et droit (16;16') simultanément si à ce moment-là le taillant (5) d'une lame tranchante (3) se trouve en face du taillant (8) du contre-couteau (7) dans une section centrale du tambour hacheur (4).

10. Procédé selon la revendication 9, **caractérisé en ce que**, dans l'unité d'exploitation (40), une subdivision du tambour hacheur (4), vu dans le sens de sa largeur, est réalisé dans une section gauche, une section droite et une section centrale dans lesquelles les taillants (5) des lames tranchantes (3) sont opposées au taillant (8) du contre-couteau (7).

11. Procédé selon les revendications 9 et 10, **caractérisé en ce, que** lors du réglage de l'intervalle de coupe (9) via le contact des taillants (5;8) des lames tranchantes (3) et du contre-couteau (7) un mouvement de recul court est associé au mouvement de réglage du contre-couteau (7).
